Europäisches Patentamt

European Patent Office

Office européen des brevets

(11) Publication number: **0 170 317 B1**

(12) **EUROPEAN PATENT SPECIFICATION**

(45) Date of publication of patent specification: **18.04.90**

(21) Application number: **85201087.5**

(22) Date of filing: **05.07.85**

(51) Int. Cl.⁵: **G 02 B 23/08,** G 02 B 27/64, G 02 B 7/24

(54) Peritelescope.

(30) Priority: **13.07.84 IL 72406**

(43) Date of publication of application:
**05.02.86 Bulletin 86/06**

(45) Publication of the grant of the patent:
**18.04.90 Bulletin 90/16**

(84) Designated Contracting States:
**AT BE CH DE FR GB IT LI LU NL SE**

(56) References cited:
**DE-A-2 833 944**
**FR-A-1 341 222**
**FR-A-1 514 377**
**US-A-2 488 239**

(73) Proprietor: **State of Israel Ministry of Defence Armament Development Authority**
**P.O. Box 2082**
**IL-30 019 Haifa (IL)**

(72) Inventor: **Dagan, Jacob**
**Mitzpe Gilon**
**Galilee (IL)**

(74) Representative: **Werner, Guy et al**
**Bugnion S.A. Case postale 375 10 Route de Florissant**
**CH-1211 Genève 12 - Champel (CH)**

Courier Press, Leamington Spa, England.

## Description

The present invention relates to optical apparatus providing selectably directional viewing along an azimuth generally and more particularly the present invention seeks to provide an improved peritelescope according to the preamble of Claim 1.

Background of the invention

Various types of peritelescopes are known in the art and are available on the market. Most of the peritelescopes presently on the market have limitations in their range both in azimuth and in elevation. In order to overcome the limitations in elevation range, most of the devices employ a pivotable elevation scan mirror or prism which pivots about an axis extending through the mirror and extending perpendicularly to the beam of light reflected or refracted thereby.

In particular a peritelescope of the type described in the preamble of Claim 1 is known from the DE—A—2833 944.

In this device, however, the sum gear is mounted on the side of the rotatable azimuth beam reflecting means and turned away from the image orientation correcting means formed by a prism.

This is very disadvantageous because the connection between the summing wheel and said prism must be installed beside the azimuth beam reflecting means.

There is also another known peritelescope apparatus from FR—A—1514 377 wherein azimuth scanning is provided by rotation of the elevation mirror assembly about a rotation axis which is parallel to the beam reflected by the elevation mirror assembly. The image distortion produced thereby is corrected by means of a rotating prism.

But the cited document does not disclose how the gear that rotates the compensating prism works. Also, this document does not disclose an image orientation correction apparatus coupled to a movable exit pupil which is arranged for 360° rotation.

Summary of the invention

The present invention provides an improved telescope, wherein a summing wheel is positioned between an azimuth beam reflecting means and an image orientation correction means, and an exit pupil assembly is coupled rotatably via a differential gear to the image orientation correcting means for unobstructed 360 degree rotation about the azimuth scanning axis, whereby rotation of the exit pupil does not affect the image seen therethrough.

In accordance with an embodiment of the present invention, the peritelescope is provided with a differential between said summing wheel and said exit pupil, comprising a first bevel gear or equivalent element rigidly fixed to said summing wheel and performing a rotation about said azimuth scanning axis (z) according to said summation of said elevation and azimuth rotation, an intermediate gear on a shaft and a second bevel gear or equivalent element for rotation about said azimuth scanning axis (z), said rotating reflecting element being rotatably mounted with respect to said intermediate gear and carried by said shaft, said movable exit pupil being fixedly mounted to said second element.

Brief description of the drawings

The present invention will be understood and appreciated more fully from the following detailed description taken in conjunction with the drawings in which:

Fig. 1 is a block diagram mechanical illustration of a peritelescope constructed and operative in accordance with a preferred embodiment of the invention;

Fig. 2 is a schematic illustration of the peritelescope of the present invention indicating the mechanical linkages between the various elements;

Fig. 3 is an optical diagrammatical illustration of the peritelescope illustrated in Fig. 2;

Fig. 4 is a pictorial illustration of a portion of the peritelescope illustrated in Fig. 2; and

Fig. 5 is a pictorial illustration of another portion of the peritelescope illustrated in Fig. 2.

Detailed description of the invention

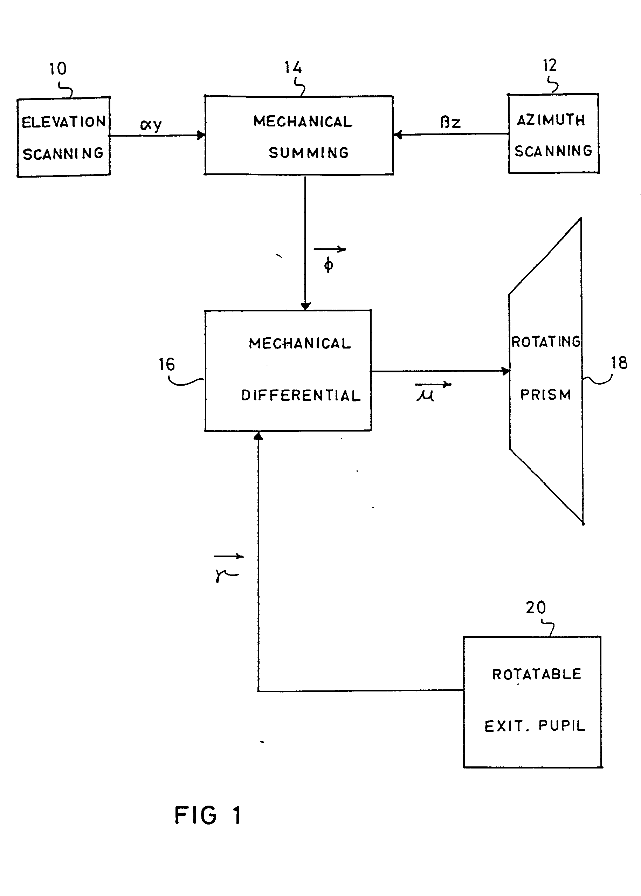

Reference is now made to Fig. 1, which is a block diagram illustration of the peritelescope constructed and operative in accordance with a preferred embodiment of the present invention. The peritelescope comprises elevation scanning apparatus 10 which is operative to orient an elevation beam reflecting surface, such as a mirror or prism, at a predetermined angle $\alpha$ about the y axis. The peritelescope also comprises azimuth scanning apparatus 12 which is operative to orient an azimuth beam reflecting surface, such as a mirror or prism, at a predetermined angle $\beta$ about the z axis.

Apparatus 10 and apparatus 12 are mechanically coupled by a mechanical summing device 14, preferably a differential which provides a rotational mechanical output about the z axis which may be expressed as:

$$\varphi = \beta \pm \alpha \qquad (1)$$

The mechanical output from summing device 14 is supplied to a second mechanical differential 16, which is operative to provide a rotational mechanical output $\mu$ to a rotatable image orientation compensation prism 18 and is also mechanically coupled to a rotatable exit pupil 20, whose orientation about the z axis is indicated as $\gamma$.

The angular relationship between $\mu$, $\varphi$ and $\gamma$ is given as follows:

$$\theta = \frac{\varphi + \gamma}{2} + \text{Constant} \qquad (2)$$

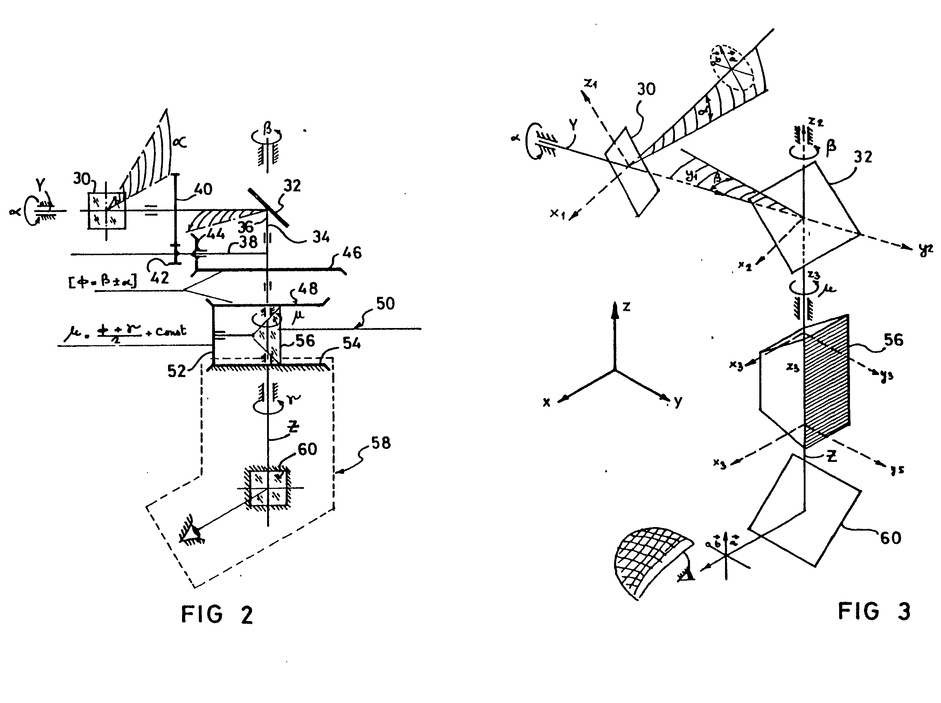

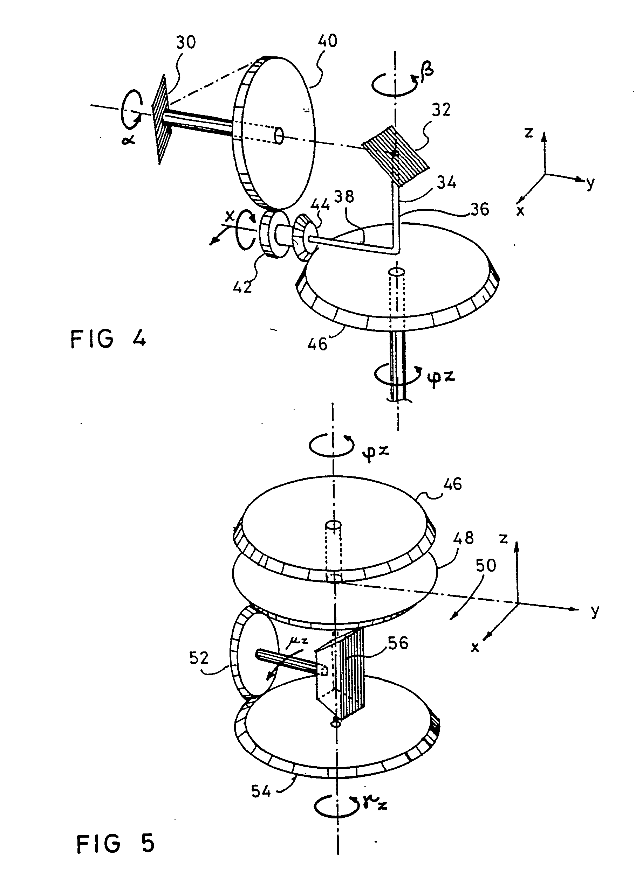

Reference is now made to Fig. 2 which is a schematic illustration of a preferred embodiment of the peritelescope of the present invention indicating the mechanical linkages between the various elements. Reference is also made to Figs. 4 and 5 which are pictorial illustrations of portions of the apparatus of Fig. 2. An elevation mirror 30 is seen to be mounted for selectable rotation about the Y-axis. The Y-axis is defined to lie in a plane perpendicular to the Z-axis, which extends vertically. The orientation of elevation mirror 30 about the Y-axis with respect to a predetermined reference is defined by an angle α.

An azimuth mirror 32 is arranged to receive radiation reflected from elevation mirror 30 and is mounted for rotation about the Z-axis. The orientation of azimuth mirror 32 about the Z-axis with respect to a predetermined reference is indicated by β. Fixedly mounted onto azimuth mirror 32 for rotation together therewith about the Z-axis is a right angled rotational mounting element 34, including a first portion 36 extending parallel to the Z-axis and a second portion 38 extending in a plane parallel to the Y-axis.

Coupled to elevation mirror 30 for rotation together therewith about the Y-axis is a gear or gear equivalent 40. Element 40 engages an intermediate gear element 42 which is rotatably mounted with respect to portion 38. Fixedly mounted with respect to intermediate gear element 42 and rotatably mounted with respect to portion 38 is a bevel wheel type gear 44, which in turn engages a summing bevel wheel type gear or equivalent 46, which is arranged for rotation about the Z-axis. The effective gear ratio between element 40 and summing gear 46 is +1:+1.

It may be appreciated that elements 34, 40, 42, 44 and 46 perform a summing function in accordance with the following equation:

$$\varphi = \beta \pm \alpha \qquad (3)$$

where φ is the angular orientation of element 46 about the Z-axis with respect to a predetermined reference.

Element 46 is fixedly coupled to a parallel bevel gear type or equivalent element 48 which also rotates about the Z-axis, together with element 46. Element 48 defines one gear of a differential 50, which also comprises an intermediate gear 52 and a terminal gear 54, which is also arranged for rotation about the Z-axis.

Rotatably mounted with respect to intermediate gear 52 is a rotation prism 56 which is operative to correct the received image for distortions produced by image rotation. The mounting of prism 56 is such that it is rotatable about the Z-axis, its orientation about the Z-axis being given by μ.

Fixedly mounted onto element 54 for rotation about the Z-axis is a movable exit pupil assembly 58 comprising a viewing mirror 60, or its equivalent. The orientation of the viewing mirror 60 about the Z-axis is indicated by γ.

The differential 50 is arranged to define the following relationship between the elements and orientations defined hereinabove:

$$\mu = \frac{\varphi + \gamma}{2} + \text{Constant} \qquad (4)$$

It may be appreciated that the movable exit pupil assembly 58 may be moved to any desired position about the Z-axis and the viewer will see the same scene, since the appropriate corrections to the image are being made automatically by suitable rotation of the rotating prism 56, through operation of the differential 50.

Reference is now made to Fig. 3 which is an optical diagrammatical illustration of the peritelescope illustrated in Fig. 2. For simplicity, the same reference numbers are used in Fig. 3 as in Fig. 2 to indicate corresponding elements.

It is seen that an important feature of the present invention lies in the fact that the reflected beams lie parallel to the rotation axes of the rotating elements. Particularly it is seen that the elevation mirror 30 is oriented such as to provide a reflected beam along the Y axis to the azimuth mirror 32, which, in turn, provides a reflected beam along the Z-axis to the viewing mirror 60 or its equivalent.

The feature that the reflected beams lie parallel to the rotation axes of the rotating mirror elements is important since it enables 360 degree scanning by each of the elements.

Correction of image distortions produced by rotation is provided by a dove prism 56, or its equivalent, which is rotatably mounted about the Z-axis in a manner described hereinabove.

It will be appreciated by persons skilled in the art that the present invention is not limited to what has been particularly shown and described hereinabove. Rather the scope of the present invention is defined only by the Claims which follow:

## Claims

1. A peritelescope for 360 degree elevation and azimuth scanning by an observer, said peritelescope comprising:
   elevation scanning means (30);
   azimuth scanning means (32) operatively associated with said elevation scanning means;
   image orientation correction means (50, 56); and
   an exit pupil assembly (58);
   said elevation scanning means comprising rotatable elevation beam reflecting means (30) arranged for unobstructed 360 degree rotation motion about an elevation scanning axis (y) oriented parallel to the beam reflected thereby,
   said azimuth scanning means comprising rotatable azimuth beam reflecting means (32) arranged for unobstructed 360 degrees rotation about an azimuth scanning axis (z), said elevation beam reflecting means being spaced apart from said azimuth scanning axis (z) to one side thereof;

said image orientation correcting means comprising a rotating reflecting element (56) and means for rotating said element at least in part as a function of the summation of said elevation and azimuth rotation,

mechanical summing means comprising a coupling gear arrangement (40, 42, 44) operatively associated with said elevation and azimuth beam reflecting means and with a summing wheel (46) which is mounted rotatably about the azimuth scanning axis (z), and providing a summation of said elevation and azimuth rotation, said summing wheel (46) being coupled to said reflecting element (56), said gear arrangement comprising an intermediate gear (42, 44) disposed on said one side of said azimuth scanning axis and arranged such that for rotation of said elevation beam reflecting means (30) in a first direction about said elevation scanning axis (y), said summing wheel (46) is rotated about said azimuth scanning axis (z) in a direction opposite to said first direction when considering said elevation and azimuth axes as if commonly oriented, characterized in that

said summing wheel (46) is positioned between said azimuth beam reflecting means (32) and said image orientation correction means (50, 56) and in that

said exit pupil assembly (58) is coupled rotatably via a differential gear (48, 52, 54) to the image orientation correcting means (50, 56) for unobstructed 360 degree rotation about the azimuth scanning axis (z), whereby rotation of said exit pupil assembly (58) does not affect the image seen therethrough.

2. A peritelescope according to Claim 1, characterized in that a differential (50) is provided between said summing wheel (46) and said exit pupil (58), comprising a first bevel gear or equivalent element (48) rigidly fixed to said summing wheel (46) and performing a rotation about said azimuth scanning axis (z) according to said summation of said elevation and azimuth rotation, an intermediate gear (52) on a shaft and a second bevel gear or equivalent element (54) for rotation about said azimuth scanning axis (z), said rotating reflecting element (56) being rotatably mounted with respect to said intermediate gear (52) and carried by said shaft, said movable exit pupil (58) being fixedly mounted to said second element (54).

3. A peritelescope according to Claim 1 or 2, characterized in that said coupling arrangement (40, 42, 44) and summing wheel (46) form a differential.

## Patentansprüche

1. Rundblickfernrohr, das von einem Beobachter im Elevations- und im Azimutschwenkbereich um 360° durchdrehbar ist, mit:

Elevationsschwenkmitteln (30);

Azimutschwenkmitteln (32), die operativ mit den Elevationsschwenkmitteln verbunden sind;

Bildorientierungskorrekturmitteln (50, 56); und einem Austrittspupillenaufbau (58);

wobei die Elevationsschwenkmittel im Elevationsschwenkbereich drehbare Lichtstrahlreflexionsmittel (30) besitzen, die für eine ungehinderte 360'-Drehbewegung um eine Elevationsschwenkachse (y) angeordnet sind, die parallel zu dem so reflektierten Lichtstrahl orientiert ist;

wobei die Azimutschwenkmittel im Azimutschwenkbereich drehbare Lichtstrahlreflexionsmittel (32) besitzen, die für eine ungehinderte 360°-Drehbewegung um eine Azimutschwenkachse (z) angeordnet sind, und die erwähnten Elevations-Lichtstrahlreflexionsmittel mit Abstand von dieser Azimutschwenkachse (z) auf einer ihrer Seiten angeordnet sind;

wobei die Bildorientierungskorrekturmittel ein drehendes reflektierendes Element (56) und Mittel besitzen, um dieses Element wenigstens teilweise als Funktion der Summe der Elevations- und Azimutdrehungen zu drehen;

wobei mechanische Summierungsmittel vorgesehen sind, die ein Kupplungsgetriebe (40, 42, 44) haben, das operativ mit den erwähnten Elevations- und Azimut-Lichtstrahlreflexionsmitteln und mit einem Summierungsgrad (46) verbunden ist, welches um die Azimutschwenkachse (z) drehbar montiert ist, eine Summierung dieser Elevations- und Azimutdrehungen liefert und mit dem erwähnten reflektierenden Element (56) gekuppelt ist, wobei das erwähnte Kupplungsgetriebe ein Zwischengetriebe (42, 44) besitzt, das auf der erwähnten einen Seite der Azimutschwenkachse liegt und so angeordnet ist, dass bei einer Drehung der Elevations-Lichtstrahlreflexionsmittel (30) um die Elevationsschwenkachse (y) in eine erste Richtung das erwähnte Summierungsrad (46) um die Azimutschwenkachse (z) in einer zu dieser ersten Richtung entgegengesetzten Richtung gedreht wird, wenn man die Elevations- und Azimutachsen wie üblich orientiert betrachtet, dadurch gekennzeichnet, dass

das Summierungsrad (46) zwischen den Azimut-Lichtstrahlreflexionsmitteln (32) und den Bildorientierungskorrekturmitteln (50, 56) angeordnet ist und

der Austrittspupillenaufbau (58) mit den Bildorientierungskorrekturmitteln (50, 56) durch eine Differentialkupplung (48, 52, 54) drehbar gekuppelt ist, um eine ungehinderte 360°-Drehung um die Azimuthschwenkachse (z) zu erlauben, wobei die Drehung dieses Austrittspupillenaufbaus (58) das dadurch sichtbare Bild nicht beeinträchtigt.

2. Rundblickfernrohr nach Anspruch 1, dadurch gekennzeichnet, dass ein Differential (50) zwischen dem Summierungsrad (46) und der Ausgangspupille (58) angeordnet ist und dieses Differential (50) ein erstes Kegelrad oder äquivalentes Element (48), das fest mit diesem Summierungsrad (46) verbunden ist und eine Drehung um die Azimutschwenkachse (z) entsprechend der erwähnten Summierung der Elevations- und Azimutdrehungen durchführt, ein Zwischenrad (52) auf einer Welle und ein zweites, um die Azimutschwenkachse (z) drehbares Kegelrad oder äquivalentes Element (54) aufweist, dass das drehende reflektierende Element (56) relativ zu dem Zwischenrad (52) drehbar montiert ist und von der erwähnten Welle getragen wird und dass die bewegliche Ausgangspupille (58) fest an dem erwähnten Element (54) montiert ist.

3. Rundblickfernrohr nach Anspruch 1 oder 2, dadurch gekennzeichnet, dass das Kupplungsgetriebe (40, 42, 44) und das Summierungsrad (46) eine Differential bilden.

**Revendications**

1. Lunette panoramique permettant un balayage de 360° en élévation et en azimut par un observateur, ladite lunette panoramique comprenant:

des moyens de balayage en élévation (30);

des moyens de balayage en azimut (32), opérationnellement associés avec lesdits moyens de balayage en élévation,

des moyens de correction de l'orientation de l'image (50, 56); et

un assemblage de pupille de sortie (58);

lesdits moyens de balayage en élévation comprenant des moyens de réflexion du faisceau rotatifs en élévation (30) disposés en vue d'une rotation inobstruée de 360° autour d'un axe de balayage en élévation (y) orienté parallèlement au faisceau ainsi réfléchi;

lesdits moyens de balayage en azimut comprenant des moyens de réflexion du faisceau rotatifs en azimut (32) disposés en vue d'une rotation inobstruée de 360° autour d'un axe de balayage en azimut (z), lesdits moyens de réflexion du faisceau en élévation étant écartés dudit axe de balayage en azimut (z) vers un de ses côtés;

lesdits moyens de correction de l'orientation de l'image comprenant un élément (56) réfléchissant rotatif (56) et des moyens pour faire tourner ledit élément au moins partiellement en fonction de la sommation de ladite rotation en élévation et de ladite rotation en azimut,

des moyens de sommation mécaniques comprenant un dispositif d'accouplement (40, 42, 44) opérationnellement associé avec lesdits moyens de réflexion du faisceau en élévation et en azimut et avec une roue de sommation (46) qui est montée de façon à pouvoir tourner autour de l'axe de balayage en azimut (z), et assurant une sommation desdites rotations en élévation et en azimut, ladite roue de sommation (46) étant couplée audit élément réfléchissant (56), ledit dispositif d'accouplement comprenant une transmission intermédiaire (42, 44) disposée sur ledit côté dudit axe de balayage en azimut et arrangée de telle manière que pour une rotation desdits moyens (30) de réflexion du faisceau en élévation dans une première direction autour dudit axe de balayage en élévation (y), ladite roue de sommation (46) tourne autour dudit axe de balayage en azimut (z) dans une direction opposée à ladite première direction, en considérant ces axes d'élévation et d'azimut comme normalement orientés, caractérisée en ce que

ladite roue de sommation (46) est positionnée entre lesdits moyens de réflexion du faisceau en azimut (32) et lesdits moyens de correction de l'orientation de l'image (50, 56) et en ce que

ledit assemblage de pupille de sortie (58) est couplé en rotation via une transmission différentielle (48, 52, 54) aux moyens de correction d'orientation de l'image (50, 56) en vue d'une rotation inobstruée de 360° autour de l'axe de balayage en azimut (z), de sorte que la rotation dudit assemblage de pupille de sortie (58) n'affecte pas l'image vue à travers.

2. Lunette panoramique selon la revendication 1, caractérisée en ce qu'un différentiel (50) est installé entre ladite roue de sommation (46) et ladite pupille de sortie (58), comprenant un premier engrenage conique ou élément équivalent (48) fixé de manière rigide à ladite roue de sommation (46) et effectuant une rotation autour dudit axe de balayage en azimut (z) selon ladite sommation desdites rotations en élévation et en azimut, une transmission intermédiaire (52) sur une tige et un deuxième engrenage conique ou élément équivalent (54) tournant autour dudit axe de balayage en azimut (z), ledit élément réfléchissant rotatif (56) étant monté de manière à tourner par rapport à ladite transmission intermédiaire (52) et porté par ladite tige, ladite pupille de sortie mobile (58) étant montée de manière fixe audit deuxième élément (54).

3. Lunette panoramique selon la revendication 1 ou la revendication 2, caractérisée en ce que ledit dispositif d'accouplement (40, 42, 44) et ladite roue de sommation (46) forment un différentiel.

FIG 1

EP 0 170 317 B1

$[\phi = \beta \pm \alpha]$

$\mu = \dfrac{\pm + r}{2} + \text{const}$

**FIG 2**

**FIG 3**

FIG 4

FIG 5